Europäisches Patentamt

(19) European Patent Office

Office européen des brevets

(11) Publication number: **0 092 066**
**B1**

(12) **EUROPEAN PATENT SPECIFICATION**

(45) Date of publication of patent specification: **11.12.85**

(21) Application number: **83102966.5**

(22) Date of filing: **24.03.83**

(51) Int. Cl.⁴: **B 62 D 17/00,** B 60 G 15/06

(54) **Vehicle wheel suspension.**

(30) Priority: **21.04.82 IT 6752782**

(43) Date of publication of application:
**26.10.83 Bulletin 83/43**

(45) Publication of the grant of the patent:
**11.12.85 Bulletin 85/50**

(84) Designated Contracting States:
**DE FR GB SE**

(56) References cited:
**DE-A-2 520 580**
**DE-B-1 278 261**
**FR-A- 821 418**
**FR-A-2 405 150**
**FR-A-2 452 411**
**US-A-2 065 071**
**US-A-4 175 771**
**US-A-4 213 631**
**US-A-4 372 575**

**PATENTS ABSTRACTS OF JAPAN, vol. 6, no.
45 (M-118) (923), 20th March 1982**

(73) Proprietor: **FIAT AUTO S.p.A.**
**Corso Giovanni Agnelli 200**
**I-10135 Torino (IT)**

(72) Inventor: **Bonelli, Mauro**
**Corso Siracusa 33**
**I-10100 Torino (IT)**

(74) Representative: **Bongiovanni, Guido et al**
**c/o Ingg. Carlo e Mario Torta Via Viotti 9**
**I-10121 Torino (IT)**

Courier Press, Leamington Spa, England.

# Description

This invention relates to a vehicle wheel suspension, and more specifically to a suspension of the so-called independent wheel type in which the wheel is supported by a mounting connected to the vehicle body by means of a swinging bar, a torsion bar which connects together the pair of front suspensions and the pair of rear suspensions, and a shock absorber fixed to the vehicle body by means of an elastic block.

In the aforesaid type of suspension there is the problem of varying the "angle of incidence" of the front suspension shock absorber with the ground in a simple and rapid manner in order to vary the so-called "offset" of the suspension, so as to adjust the steering sensitivity of the vehicle, especially when either a conventional mechanical steering device or a servo-assisted hydraulic device (hydrosteering) can be mounted on the vehicle at the request of the user. Hereinafter in the description the term "angle of incidence" signifies the angle formed between the projection of the shock absorber axis in a plane lateral to the vehicle and parallel to the plane in which the wheel lies, and the vertical to the ground passing through the axis of rotation of the wheel, and the term "offset" signifies the segment which is cut in the ground plane by the projection in a plane lateral to the vehicle and parallel to the plane in which the wheel lies, of the axis joining the elastic block to the ball joint connecting the swinging bar to the suspension mounting, which lies between the projection itself and the vertical to the ground passing through the axis of rotation of the wheel.

The methods used consist generally either of replacing the elastic suspension block with another block of different form so as to obtain angles of incidence and thus offsets of a different extent, or of applying means to enable the point of connection of the elastic block to the vehicle body to be moved, so as to again obtain a variation in the angle of incidence.

These methods are not without drawbacks. In prticular, the system of replacing the elastic block by another is hardly practical and is costly, as it requires the construction of different elastic block models, each for a determined value of the angle of incidence. The second system enables different angles of incidence to be obtained using the same block, but has the drawback of leading not only to a variation in the angle of incidence but also a variation in the inclination of the shock absorber axis to the axis of the block, this leading to a permanent deformation of this latter and overloading the elastic block bearing.

The object of the present invention is to provide a vehicle wheel suspension free from the described drawbacks, which is able to allow the suspension offset to be simply and quickly changed, and is of simple and economic construction.

This object is attained according to the present invention by a vehicle suspension of the type comprising a mounting which is arranged to rotatably house the hub of said wheel and is supported by a swinging bar connected to the body of said vehicle and by a shock absorber comprising a casing and a rod, this latter being connected to the vehicle body by means of an elastic block comprising a bearing keyed on to said rod, an outer housing arranged for fixing to a body element, and at least one deformable elastic sleeve disposed between said bearing and said housing, characterised in that said body element is curved, and comprises a substantially oval seat for said elastic block, in which this latter is mobile between at least two predetermined positions, said outer housing being provided, for its fixing to the body, with a flange having a curved surface and arranged to cooperate with said body element.

The present invention will be more apparent from the description of one embodiment thereof given by way of non-limiting example hereinafter with reference to the accompanying drawings, in which:

Figure 1 is a side view of a suspension according to the present invention;

Figure 2 is a simplified front view of the suspension of Figure 1; and

Figures 3 and 4 show an element of the suspension of Figures 1 and 2 in two different operating positions.

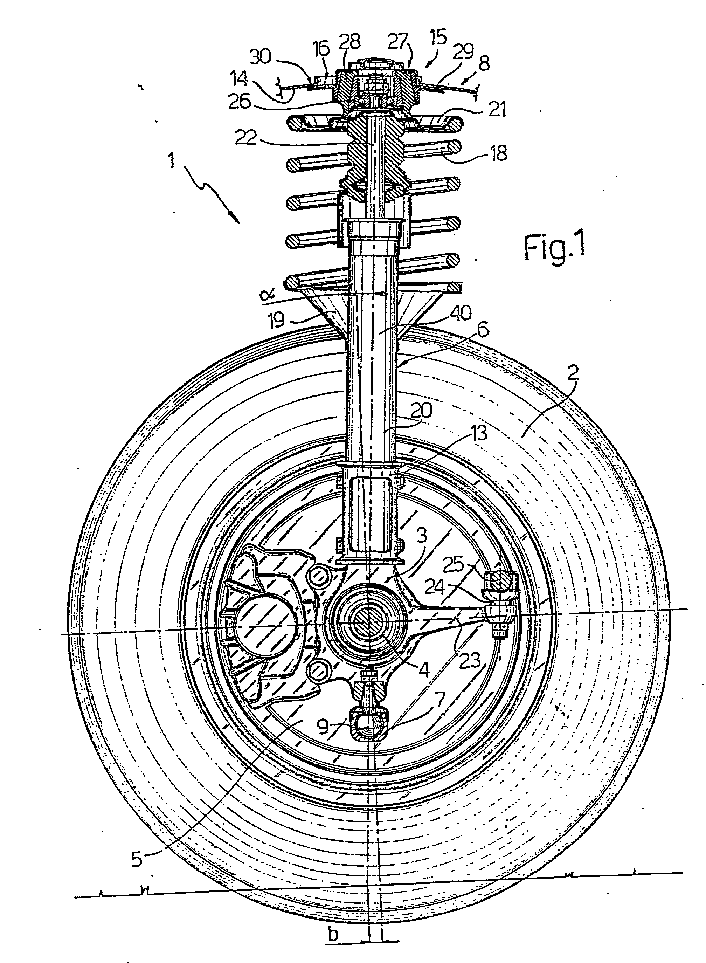

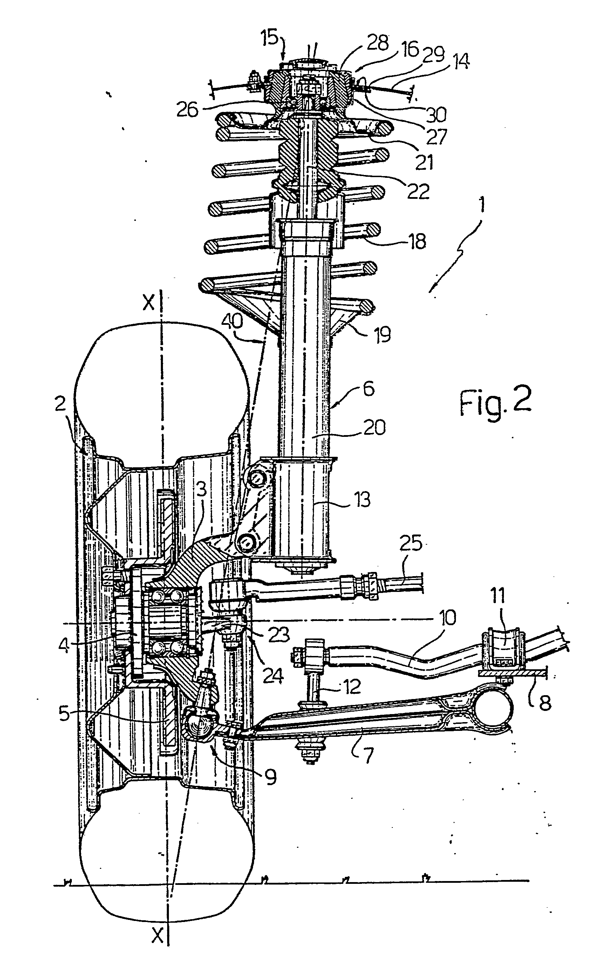

In Figures 1 and 2, the reference numeral 1 indicates overall a suspension for a wheel 2 of a vehicle, not shown. The suspension 1 is of the so-called "independent wheel" type and is specifically a MacPherson front suspension. The suspension 1 comprises a mounting 3 to rotatably house the wheel hub 4 provided with a brake disc 5, and a shock absorber 6 and swinging bar 7 which are arranged to support the mounting 3 by connecting it to the body 8 of said vehicle.

Specifically, the swinging bar 7 is connected to the mounting 3 by means of a ball joint 9, and is connected to the body 8 by means of a known hinge, not shown. The swinging bar 7 is also connected to a torsion bar 10, which is connected to the body 8 by means of a support 11 and to the swinging bar 7 by means of a rod 12. As known, the purpose of the torsion bar 10 is, inter alia, to connect together the two front suspensions and the two rear suspensions respectively, in order to ensure their uniform behaviour. The shock absorber 6 is connected to the mounting 3 by means of a lower socket connector 13 rigidly connected to said mounting 3, and is connected at its top to the body 8, namely to a curved body element 14 of substantially spherical form, by means of an elastic block 15 housed in a seat 16 in the body element 14. The shock absorber 6 is also provided with a spiral spring 18 mounted about it between a disc 19 connected to the casing 20 of the shock absorber 6 and a disc 21 connected to the shock absorber rod 22 which slidable in the casing 20. This latter is fixed to the connector 13, whereas the rod 22 is connected to the block 15.

The mounting 3 is also provided with an arm 23 connected by an articulated joint 24 to the track rod 25 of any known steering device, not shown for simplicity.

The block 15 comprises a rolling bearing 26 keyed on to the rod 22, an outer housing 27, preferably of sheet metal, arranged for releasable fixing to the body element 14, and at least one deformable elastic sleeve 28, preferably of rubber construction, disposed between the bearing 26 and housing 27. The housing 27 is provided with a connection flange 29 which is also curved, having a substantially spherical surface 30 facing the body element 14, and arranged to cooperate with this latter.

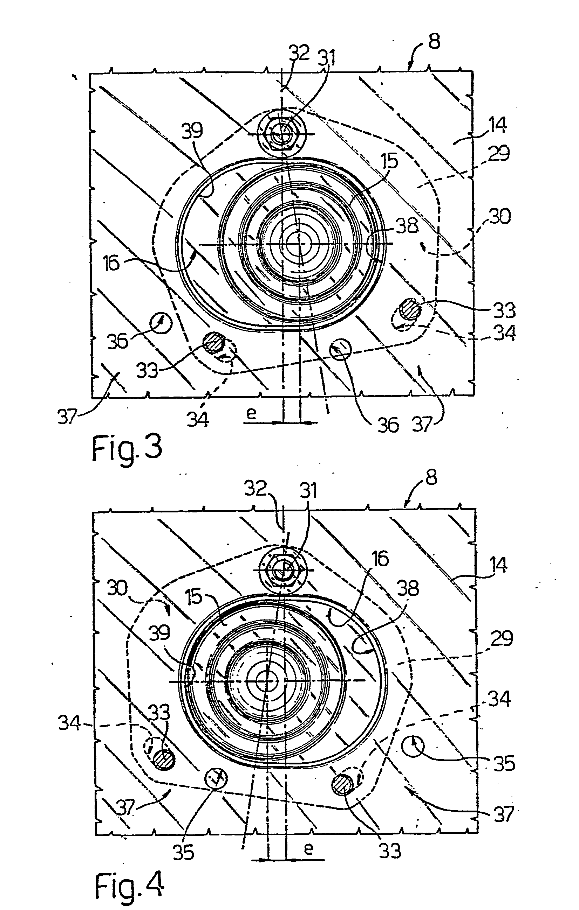

With reference to Figures 3 and 4, the flange 29 is of substantially pentagonal shape when viewed in plan, and the seat 16 is substantially oval. The block 15 is housed in the seat 16 slackly so as to be mobile therein between at least two predetermined positions shown in Figures 3 and 4 respectively.

The elastic block 15 can be fixed to the body element 14 either in the position of Figure 3 or in the position of Figure 4 by any removable fixing means of known type. In the particular case shown, the block 15 is fixed about the element 14 by screws which lock the flange 29 against the said element 14. A first screw 31 is disposed laterally to the seat 16 to correspond with the transverse axis of symmetry 32 of this latter, and a pair of screws 33 disposed in slots 34 provided in the flange 29 can selectively engage a first bore 35 or a second bore 36 of two pairs 37 of bores provided in the element 14 laterally to the seat 16, on the opposite side to the screw 31. The block 15 is housed in the seat 16 eccentrically to the axis of symmetry 32, at opposite ends 38 or 39 of the seat 16, so as to assume two symmetrical positions about the axis 32, in which the axis of the block 15 is distant from the axis 32 by an identical distance e.

The geometry of the suspension 1 is also such that in a plane X—X lateral to the vehicle and parallel (or coinciding) with the plane in which the wheel 2 lies, the projection of the axis of the shock absorber 6 coincides with the projection of an axis 40 joining the block 15 to the ball joint 9, said projection intersecting the axis of rotation of the wheel 2 and being oblique to the vertical to the ground which passes through the axis of rotation of the wheel 2, in such a manner as to define where it cuts the ground plane a segment b of determined length lying between said projection and said vertical, and constituting the "offset" of the suspension 1. The angle lying between the projection of the axis 40 and said vertical coincides with the angle of incidence of the axis of the shock absorber. The radius of spherical curvature of the body element 14 and flange 29 has its centre lying substantially on the axis of rotation of the wheel 2. In one embodiment, not shown, the element 14 and flange 29 could be other than spherical, and instead have any curved profile of which the focus is disposed substantially on the axis of the hub 4.

In order to change the length of the segment b, for example to adapt the suspension 1 if the known mechanical control, not shown, for the track rod 25 is replaced by a known servo-assisted hydraulic control (hydrosteering), not shown, it is necessary only to unscrew the screws 33 from the bores 35 and slacken the screw 31. By this means, the block 15 can be made to rotate eccentrically to the seat 16 about the screw 31, to move it from the position of Figure 3, which corresponds with the end 38, to the position of Figure 4, which corresponds with the end 39 of the seat 16, or vice versa. The screws 33 are then re-inserted into the slots 34, which now correspond with the bores 36, and the block 15 can be fixed in its new position. Because of the geometry of the suspension 1 and the cooperation of the spherical surface 30 with the spherical element 14 formed in the body 8, the angle of incidence α of the axis of the shock absorber 6 with respect to the ground is also changed during the movement of the block 15 in the seat 16, so as to vary the length of the segment b. In this respect, the shock absorber 6 and the entire mounting 3 rotate about the axis of the wheel 2 parallel to the plane X—X, and consequently the ball joint 9 approaches (or withdraws from) the vertical to the ground which passes through the wheel axis.

The described suspension 1 has the advantage of allowing the shock absorber 6 to always remain coaxial with the block 15 and relative bearing 26, whatever the angle of incidence α and the consequent offset b. Consequently, no reaction stresses occur in the block 15 as a consequence of its movement in varying the segment b. Furthermore, the invention provides a suspension which is of simple and economical construction, which uses a single type of elastic block, and which can be adjusted simply and rapidly by merely rotating the block in its seat in the vehicle body, without having to disassemble the suspension itself.

**Claims**

1. A suspension (1) for a vehicle wheel (2), of the type comprising a mounting (3) which is arranged to rotatably house the hub (4) of said wheel (2) and is supported by a swinging bar (7) connected to the body (8) of said vehicle and by a shock absorber (6) comprising a casing (20) and a rod (22), this latter being connected to the vehicle body (8) by means of an elastic block (15) comprising a bearing (26) keyed on to said rod (22), an outer housing (27) arranged for fixing to a body element (14), and at least one deformable elastic sleeve (28) disposed between said bearing (26) and said housing (27), characterised in that said body element (14) is curved, and comprises a substantially oval seat (16) for said elastic block (15), in which this latter is mobile between at least two predetermined positions, said outer housing (27) being provided, for its fixing to the body (8), with a flange (29) having a curved surface (30) and arranged to cooperate with said body element (14).

2. A suspension (1) as claimed in claim 1, characterised in that said flange (29) can be fixed to said body element (14) by removable fixing means (31, 33, 33), about at least one (31) of which said elastic block (15) can be made to rotate eccentrically with respect to said seat (16).

3. A suspension (1) as claimed in claim 1 or 2, characterised in that said body element (14) and said surface (30) of said flange (29) have a curved profile with radii of curvature such that the focus of said profile is disposed substantially on the axis of said hub (4).

4. A suspension (1) as claimed in one of the preceding claims, characterised in that said body element (14) and said flange (29) are spherical, and have a radius such that their centre of curvature lies substantially on the axis of rotation of said wheel (2).

5. A suspension (1) as claimed in one of the preceding claims, wherein said swinging bar (7) is connected to said mounting by a ball joint (9), characterised in that in a plane (X—X) lateral to said vehicle and parallel to the plane in which said wheel (2) lies, the projection of the axis of said shock absorber coincides with the projection of the axis (40) joining said block (15) to said ball joint (9), said projection intersecting the axis of rotation of said wheel (2) and being oblique to the vertical to the ground which passes through the axis of rotation of said wheel (2), in such a manner as to define where it cuts the ground plane a segment (b) of determined length lying between said projection and said vertical.

6. A suspension (1) as claimed in any one of claims 2 to 5, characterised in that said fixing means comprise a first screw (31) disposed laterally to said seat (16) on an axis of transverse symmetry (32) thereof, two pairs (37) of bores provided in said body element (14) laterally to said seat (16) on the opposite side to said first screw (31), a pair of slots (34) provided in said first flange (29), and a pair of screws (33) disposed in said slots (34) and arranged to selectively fix said flange (29) in a position corresponding with a first (35) and a second (36) of said bores of each of said pairs (37) of bores; said block (15) being housed in said seat (16) slackly and in an eccentric position with respect to said transverse axis (32) so as to be able to rotate about said first screw (31) in order to move from a first position corresponding with one end (38) of said seat (16), in which it is retained by said screws (33) disposed in said first bore (35) of each pair (37) of bores, to a second position symmetrical with the first and corresponding with a second end (39) of said seat (16), in which it is retained by said screws (35) disposed in said second bore (36) of each pair (37) of bores.

7. A suspension (1) as claimed in claim 6 and dependent on claim 5, characterised in that in passing from said first position to said second position and vice versa, said block (15) produces a variation in the angle of incidence (α) of said shock absorber (6) with respect to the ground, so as to vary the length of said segment (b) defined in the ground plane by said projection of said axis (40) joining said block (15) to said ball joint (9).

## Revendications

1. Suspension (1) pour une roue de véhicule (2), du type comportant une ferrure (3) qui est disposée pour recevoir à rotation le moyeu (4) de la roue (2) et qui est supportée par un bras oscillant (16) relié à la carrosserie (8) du véhicule et par un amortisseur (6) comportant un carter (20) et une tige (22), cette dernière étant reliée à la carrosserie (8) du véhicule au moyen d'un bloc élastique (15) comportant un palier (26) claveté sur la tige (22), un carter extérieur (27) disposé pour être fixé sur un élément de carrosserie (14) et au moins un manchon élastique déformable (28) disposé entre le palier (26) et la ferrure (27), caractérisée en ce que cet élément de carrosserie (14) est courbe et comporte un siège pratiquement ovale (16) pour le bloc élastique (15), ce bloc étant mobile dans le siège entre au moins deux positions prédéterminées, le carter extérieur (27) présentant, pour sa fixation sur la carrosserie (8), une collerette (29) ayant une surface courbe (30) et disposée pour coopérer avec l'élément de carrosserie (14).

2. Suspension selon la revendication 1, caractérisée en ce que cette collerette (29) peut être fixée sur l'élément de carrosserie (14) par des moyens de fixation amovibles (31, 33, 33), autour d'au moins l'un (31) desquels le bloc élastique (15) peut tourner de façon excentrée par rapport au siège (16).

3. Suspension selon la revendication 1, ou la revendication 2, caractérisée en ce que cet élément de carrosserie (14) et cette surface (30) de la collerette (29) ont un profil courbe avec des rayons de courbure tels que le foyer du profil se trouve pratiquement sur l'axe du moyeu (4).

4. Suspension selon l'une quelconque des revendications précédentes, caractérisée en ce que l'élément de carrosserie (14) et la collerette (29) sont sphériques et ont un rayon tel que leurs centres de courbure se trouvent pratiquement sur l'axe de rotation de la roue (2).

5. Suspension selon l'une quelconque des revendications précédentes, dans laquelle le bras oscillant (7) est relié à la ferrure par un joint à rotule (9), caractérisée en ce que, dans un plan (X—X) latéral par rapport au véhicule et parallèle au plan dans lequel se trouve la roue (2), la projection de l'axe de l'amortisseur coïncide avec la projection de l'axe (40) reliant le bloc (15) au joint à rotule (9), cette projection coupant l'axe de rotation de la roue (2) et étant inclinée par rapport à la verticale au sol qui passe par l'axe de rotation de la roue (2), de manière à définir, là où elle coupe le plan du sol, un segment (b) d'une longueur déterminée disposé entre cette projection et cette verticale.

6. Suspension selon l'une quelconque des revendications 2 à 5, caractérisée en ce que ces moyens de fixation comportent une première vis (31) disposée latéralement par rapport au siège (16) sur un axe de symétrie transversal (32), deux paires (37) d'alésages prévus dans l'élément de carrosserie (14) latéralement par rapport au siège (16) sur le côté opposé à la première vis (31), deux fentes (34) prévues dans la collerette (29) et une paire de vis (33) disposées dans les fentes (34) et agencées pour fixer sélectivement cette collerette (29) dans une position correspondant à un premier (35) et à un deuxième (36) de ces alésages de chacune des paires (37) d'alésages, ce bloc (15) étant logé sans être bloqué dans le siège (16) dans une position excentrée par rapport à l'axe transversal (32) de façon à pouvoir tourner autour de la première vis (31) afin de se déplacer d'une première position correspondant à une extrémité (38) du siège (16), dans laquelle il est retenu par ses vis (33) disposées dans le premier alésage (35) de chaque paire (37) d'alésages, jusqu'à une deuxième position symétrique par rapport à la pemière et correspondant à une deuxième extrémité (39) du siège (16), dans laquelle il est retenu par ses vis (33) disposées dans le deuxième alésage (36) de chaque paire (37); d'alésages.

7. Suspension selon la revendication 6 et la revendication 5, caractérisée en ce que, en passant de la première position à la deuxième position et vice versa, le bloc (15) provoque une varation de l'angle d'incidence (α) de l'amortisseur (6) par rapport au sol, de façon à faire varier la longueur du segment (b) défini dans le plan du sol par la projection de l'axe (40) reliant le bloc (15) au joint à rotule (9).

## Patentansprüche

1. Aufhängung für ein Wagenrad (2), bestehend aus einem Seitenstück (3), welches eine Nabe (4) dieses Rades (2) aufnimmt und aus einem an der Karosse dieses Fahrzeuges befestigten Schwingarm (7) und durch einen aus einem Körper (20) und einem Schaft (22) bestehenden Stossdämpfer (6) gehalten wird, wobei letzterer an die Karosse (8) des Fahrzeuges mittels eines elastischen Einsatzstückes (15) befestigt ist, bestehend aus einem auf den Schaft (22) aufgeschrumpften Lager (26), einem Aussenmantel (27) zum Fixieren an ein Karossenelement (14), sowie aus mindestens einer zwischen dem Lager (26) und dem Aussenmantel (27) eingeschobenen elastisch verformbaren Muffe (28), dadurch gekennzeichnet dass das Karossenelement (14) gebogen ist und einen im wesentlichen ovalen Sitz (16) für das elastische Einsatzstück (15) aufweist und einen Flansch (29) zur Befestigung an die Karosse (8) mit gebogener Fläche (30) zur Zusammenwirkung mit dem Karossenelement (14) besitzt.

2. Aufhängung (1) nach Anspruch 1, dadurch gekennzeichnet dass der Flansch (29) an das Karossenelement (14) durch abmontierbare Befestigungsmittel (31, 32, 33) montierbar ist, um mindestens eines derselben das elastische Einsatzstück gegenüber des Sitzes (16) aussermittig drehbar ist.

3. Aufhängung (1) nach Anspruch 1 bzw. 2,

dadurch gekennzeichnet dass das Karossenelement (14) und die Oberfläche (30) des Flansches (29) ein gebogenes Profil mit solchen Biegeradien aufweist, dass das Brennpunkt dieses Profils im wesentlichen in Übereinstimmung mit der Achse dieser Nabe (4) liegt.

4. Aufhängung (1) nach einer der vorherigen Ansprüche, dadurch gekennzeichnet dass das Karossenelement (14) und der Flansch (29) spha-4risch sind und einen solchen Biegeradius aufweisen, dass der Biegemittelpunkt sich im wesentlichen auf der Drehachse dieses Rades (2) befindet.

5. Aufhängung (1) nach einer der vorherigen Ansprüche, wo dieser Schwingarm (7) mit dem Seitenstück (3) durch ein Kugelgelent (9) verbunden ist, dadurch gekennzeichnet das auf einer Seitenfläche (X—X) des Fahrzeuges und parallel zur Auflagefläche dieses Rades (2), die Achsenprojektion dieses Stossdämpfers mit der Projektion der vom Einsatzstück (15) zum Kugelgelenk (9) führenden Achse (40) zusammenfällt, Projektion welche die Drehachse dieses Rades (2) schneidet und senkrecht zur Bodenfläche steht die so durch die Drehachse dieses Rades verläuft, dass auf der Bodenfläche zwischen dieser und der Senkrechten ein Segment (b) von bestimmter Länge abgeschnitten wird.

6. Aufhängung (1) nach einer der vorherigen Ansprüche 2—5, dadurch gekennzeichnet dass die genannten Befestigungsmittel eine erste Schraube (31) seitlich am Sitz (16) in der Nähe einer Symmetrische Querachse (32) derselben angebracht, zwei Paar Bohrungen (37) seitlich des Sitzes (16) gegenüber der ersten Schraube (31) in dem Karossenelement (14) sowie ein Paar Langlo-4cher (34) zur entsprechenden Befestigung des Flansches (29) in einer ersten (35) und zweiten Bohrung (36) dieses Bohrungspaares umfassen; das Einsatzstück (15) ist im Sitz (16) mit Spiel und aussermittiger Lage gegenüber der Querachse (32) so aufgenommen, dass es sich um die erste Schraube (31) drehen kann und in einer ersten Lage in der Nähe eines Endes (38) des Sitzes (16) in dem es von den Schrauben (33) die sich in der ersten Bohrung (35) des Bohrungspaares (37) befinden, festgehalten wird; in eine zweite zur ersten symmetrischen Lage verschoben wird in die Nähe eines zweiten Endes (39) des Sitzes (16), in der es von den Schrauben (33) die sich in der zweiten Bohrung (36) des Bohrungspaares (37) befinden, festgehalten wird.

7. Aufhängung (1) nach Anspruch 6 abhängig von Anspruch 5, dadurch gekennzeichnet dass beim Ubergang von der ersten in die zweite Lage und umgekehrt, das Einsatzstück (15) eine Veränderung des Neigungswinkels (α) des Stossdämpfers (6) gegenüber der Bodenfläche hervorruft, wodurch sich die Länge des auf der Bodenfläche der Projektion des vom Einsatzstück (15) Kugelgelenk (9) geführten Segmentes (b) verändert.

Fig.1

Fig.2

Fig. 3

Fig. 4

3